# EUROPEAN PATENT SPECIFICATION

(11) **EP 2 131 078 B1**
(45) Date of publication and mention of the grant of the patent: **16.03.2011**
(21) Application number: 09251472.8
(22) Date of filing: 02.06.2009
(51) Int. Cl.: F16H 63/34

(54) **Manual transmission for vehicle**
Handschaltgetriebe für ein Fahrzeug
Transmission manuelle pour véhicule

(30) Priority: 02.06.2008 JP 2008144816
(43) Date of publication of application: 09.12.2009
(73) Proprietor: Toyota Jidosha Kabushiki Kaisha, Toyota-shi, Aichi-ken 471-8571 (JP)
(72) Inventor: Fukushima, Masami, Toyota-shi, Aichi-ken 471-8571 (JP); Yonemochi, Kazuhiro, Toyota-shi, Aichi-ken 471-8571 (JP)
(74) Representative: Albutt, Anthony John

(56) References cited:
- EP-A- 1 036 960
- EP-A- 1 972 834
- WO-A-2009/040985
- DE-A1-102005 056 261
- DE-A1-102007 011 034
- FR-A- 2 885 981
- JP-A- 11 190 427

## Description

### BACKGROUND OF THE INVENTION

### 1. Field of the Invention

The present invention relates to a manual transmission for a vehicle in which a control lever, which actuates a transmission mechanism for shifting a plurality of gears, is connected to a manual gear change operation element with the control lever fixed at a prescribed connecting position.

### 2. Description of the Related Art

Japanese Patent Application Publication No. 11-190427 (JP-A-11-190427) discloses a manual transmission for a vehicle, which includes a case that houses a transmission mechanism that shifts a plurality of gears, and a control lever which is provided in the case so as to be turnable about an axis and coupled to a manual gear change operation element via a cable, that is turned into any of a plurality of positions according to the operating position of the manual gear change operation element, to actuate the transmission mechanism. According to the manual transmission for a vehicle, a portion of the cable near the control lever is not stretched linearly when a specific gear is selected, preventing vibration noise or the like due to a gap between an inner cable and an outer cable of the cable.

In the above manual transmission, the cable may be connected to the control lever with the control lever fixed at a prescribed connecting position, of the plurality of positions. According to this configuration, the actuation positions of the manual gear change operation element and the control lever are synchronized in operating position based on a predetermined position, making it possible to provide the manual gear change operation element side with an erroneous reverse shift prevention mechanism that prevents erroneous shifting from a forward gear to a reverse gear, for example while traveling forward.

In order to fix the control lever at the connecting position in the above manual transmission for a vehicle, a fixation jig such as a fixation pin is used which is, for example, inserted into the case and engaged with the control lever to restrict turning of the control lever. In order to unfix the control lever after the manual transmission for a vehicle is mounted on a vehicle and after the connection of the cable, however, it is necessary to directly operate the fixation jig provided in the manual transmission and, thus, to secure a so-called handling space must be provided to allow access to the fixation jig in a relatively small engine room (engine compartment). Accordingly, the arrangement of parts in the engine room is restrained, making it difficult to make the engine room compact.

FR 288 5981, which represents the closest priort art, discloses a manual transmission for a vehicle, including a transmission mechanism that shifts a plurality of gears, a case that houses the transmission mechanism, a manual gear change operation element (not depicted) to which a manual gear change operation is input, and a control lever that is provided in the case so as to be turnable about an axis and coupled to the manual gear change operation element via a cable (not depicted), the control lever being turned to one of a plurality of positions according to an operating position of the manual gear change operation element to actuate the transmission mechanism, and the cable being connected to the manual gear change operation element with the control lever fixed at a prescribed connecting position, of the plurality of positions, the manual transmission further comprises:
- an engagement arm that is provided on the control lever;
- a retention member that engages with the engagement arm to fix the control lever at the connecting position; and
- a retention release device that disengages the retention member from the engagement arm and moves to a retracted position.

DE 10 2005056 261 discloses on automatic transmission including a gear lever, a manual control lever, a position detecting device and a position fixing device.

It is an object of the invention to provide a manual transmission for a vehicle, which avoids the aforementioned advantages.

According to the present invention, said object is solved by a manual transmission having the features of independent claim 1.

### SUMMARY OF THE INVENTION

The present invention provides a manual transmission for a vehicle in which a control lever that actuates a transmission mechanism that shifts a plurality of gears is connected to a manual gear change operation element with the control lever fixed at a prescribed connecting position, and in which the control lever can be unfixed without directly operating a fixation jig that fixes the control lever.

One embodiment of the present invention relates to a manual transmission for a vehicle, including a case that houses a transmission mechanism that shifts a plurality of gears, and a control lever that is provided in the case so as to be turnable about an axis and coupled to a manual gear change operation element via a cable, the control lever being turned to any of a plurality of positions according to an operating position of the manual gear change operation element to actuate the transmission mechanism, and the cable being connected to the manual gear change operation element with the control lever fixed at a prescribed connecting position, of the plurality of positions. The manual transmission for a vehicle includes an engagement arm that is provided on the control lever, a retention member that is retainable on the engagement arm to fix the control lever at the connecting position, and a retention release device that causes the retention member to be disengaged from the engagement arm and moved to a retracted position when the control lever is turned to a position different from the connecting position, of the plurality of positions.

Furthermore the retention release device includes a support member that supports the the retention member so as to be rotatable about an axis extending in parallel to a turning axis of the control lever and movable in a direction of the axis, and an urging member that urges the retention member toward the retracted position.

The support member may include a support shaft that is projected from the case in parallel to the turning axis of the control lever and supports the retention member so as for the retention member to be rotatable about the axis and movable in the direction of the axis, and the urging member may be a coil spring wound around an outer periphery of the support shaft with one end retained on the retention member and the other end retained on the base part or the case to urge the retention member toward the retracted position and in a direction of a rotational axis of the retention member.

The retention member may include an engagement projection that projects in parallel to the rotational axis of the retention member so as to engage with an end of the control lever, and an inclined surface that is formed on the retention member and slides relative to the control lever to move the retention member in a direction of the rotational axis of the retention member against an urging force of the coil spring to disengage the engagement projection from the end of the control lever during a process of turning the control lever from the connecting position to a position different therefrom.

The retention member may include an engagement projection that projects in parallel to the rotational axis of the retention member in a direction in which the retention member is urged so as to engage with an end of the control lever, and an inclined surface that is formed on the same side as the engagement projection.

The retention member may include the engagement projection at one end and a support portion that is rotatably supported by the support member at the other end, and the inclined surface may be formed between the engagement projection and the support portion.

In the manual transmission for a vehicle in accordance with the present invention, a control lever that actuates a transmission mechanism that shifts a plurality of gears is connected to a manual gear change operation element via a cable while being fixed at a prescribed connecting position. The manual transmission for a vehicle includes an engagement arm that is provided on the control lever, a retention member that is retainable on the engagement arm to fix the control lever at the connecting position, and a retention release device that causes the retention member to be disengaged from the engagement arm and moved to a retracted position when the control lever is turned to a position different from the connecting position, of the plurality of positions to which the control lever is turnable. Consequently, the retention member that fixes the control lever can be disengaged from the engagement arm that is provided on the control lever by operating the manual gear change operation element. Therefore, the control lever can be unfixed without directly operating a fixation jig that fixes the control lever, that is, the engagement arm and the retention member. Accordingly, it is not necessary to secure a handling space for a worker in which unfixing work can be performed in an engine room (engine compartment), increasing the degree of freedom in arrangement of parts in the engine room and making the engine room compact compared to a case where a handling space is secured.

The retention release device includes a support member that supports the retention member so as to be rotatable about an axis extending in parallel to a turning axis of the control lever and movable in a direction of the axis, and an urging member that urges the retention member toward the retracted position. Consequently, the retention member fixing the control lever can be disengaged from the engagement arm provided on the control lever by operating the manual gear change operation element. Therefore, the control lever can be unfixed without directly operating a fixation jig, that is, the engagement arm and the retention member. After the unfixing, the retention member can be moved to the retracted position by the urging member so that the retention release device advantageously does not obstruct subsequent operation of the control lever.

The support member includes a support shaft that is projected from the case in parallel to the turning axis of the control lever and supports the retention member so as for the retention member to be rotatable about the axis and movable in the direction of the axis, and the urging member is a coil spring wound around an outer periphery of the support shaft with one end retained on the retention member and the other end retained on the base part or the case to urge the retention member toward the retracted position and in a direction of a rotational axis of the retention member. Consequently, the retention member that fixes the control lever can be disengaged from the engagement arm provided on the control lever by operating the manual gear change operation element. Therefore, the control lever can be unfixed without directly operating a fixation jig, that is, the engagement arm and the retention member. After the unfixing, the retention member can be moved to the retracted position by the coil spring so that the retention release device advantageously does not obstruct subsequent operation of the control lever.

The retention member includes an engagement projection that projects in parallel to the rotational axis of the retention member so as to engage with an end of the control lever, and an inclined surface that is formed on the retention member that slides relative to the control lever to move the retention member in a direction of the rotational axis of the retention member against an urging force of the coil spring to disengage the engagement projection from the end of the control lever during a process of turning the control lever from the connecting position to a position different therefrom. Consequently, the engagement projection of the retention member that fixes the control lever can be disengaged from the end of the engagement arm provided on the control lever by operating the manual gear change operation element. Therefore, the control lever can be unfixed without directly operating a fixation jig, that is, the engagement arm and the engagement projection.

### BRIEF DESCRIPTION OF THE DRAWINGS

The foregoing and further features and advantages of the invention will become apparent from the following description of example embodiments with reference to the accompanying drawings, wherein like numerals are used to represent like elements, and wherein:
FIG 1 shows a manual transmission in accordance with an embodiment of the present invention, and a manual gear change operation device, operable by a driver to shift gears of the manual transmission;
FIG 2 is a top view of the manual transmission that shows as enlarged a portion indicated by the arrow II in FIG 1;
FIG 3 shows predefined operation paths of a shift lever that shows a portion indicated by the arrow III in FIG 1;
FIG 4 is an enlarged view of the manual gear change operation device that shows a portion indicated by the arrow IV in FIG 1;
FIG 5 is a cross sectional view that shows an exemplary cross section of a portion, namely an upper end, of the shift lever shown in FIG 4;
FIG 6 is an illustration of the manual gear change operation device corresponding to FIG. 4, that shows a state in which the shift lever shown in FIG. 4 is tilted until a contact portion of a restriction cancellation member provided in the shift lever contacts a restriction portion of a base;
FIG. 7 is an illustration corresponding to FIG 4, that illustrates a predetermined operation to move the shift lever shown in FIG. 4 to a fourth select position S4;
FIG 8 is a top view of and around a retention release device that shows a portion of the manual transmission indicated by the arrow VIII in FIG 2;
FIG 9 is a cross sectional view of the retention release device that is taken along the line IX-IX in FIG 8;
FIG 10 is a top view of and around the retention release device corresponding to FIG 8, that shows a state immediately after a select control lever is turned from a first select turning position to the fourth select turning position shown in FIG 8;
FIG 11 is a cross sectional view of the retention release device corresponding to FIG. 9, that is taken along the line XI-XI in FIG. 10; and
FIG 12 is an illustration of and around the retention release device corresponding to FIG. 8 that shows a state in which a retention member is moved from a position shown in FIG. 11 to a retracted position.

### DETAILED DESCRIPTION OF THE EMBODIMENTS

Hereinafter, an embodiment of the present invention will be described in detail with reference to the drawings. In the drawings, the embodiment below is simplified or deformed appropriately, and the dimensional ratio, shape, and so forth of respective parts may not necessarily be accurate.

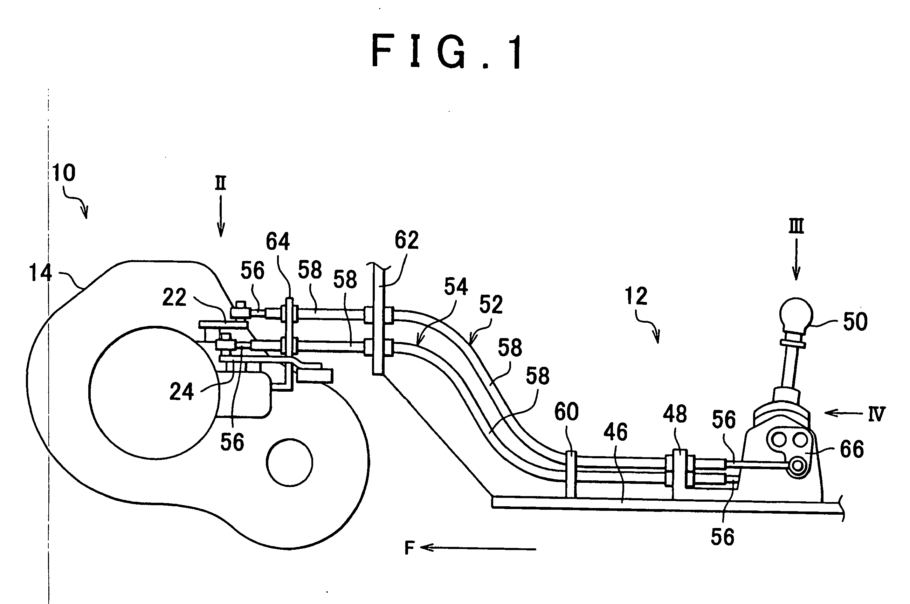

FIG 1 shows a manual transmission 10 in accordance with a first embodiment of the present invention, and a manual gear change operation device 12 operable by a driver to shift gears of the manual transmission 10. FIG. 1 schematically shows the manual transmission 10 and the manual gear change operation device 12 as viewed from the left side of the vehicle, with the arrow F pointing to the front side of the vehicle.

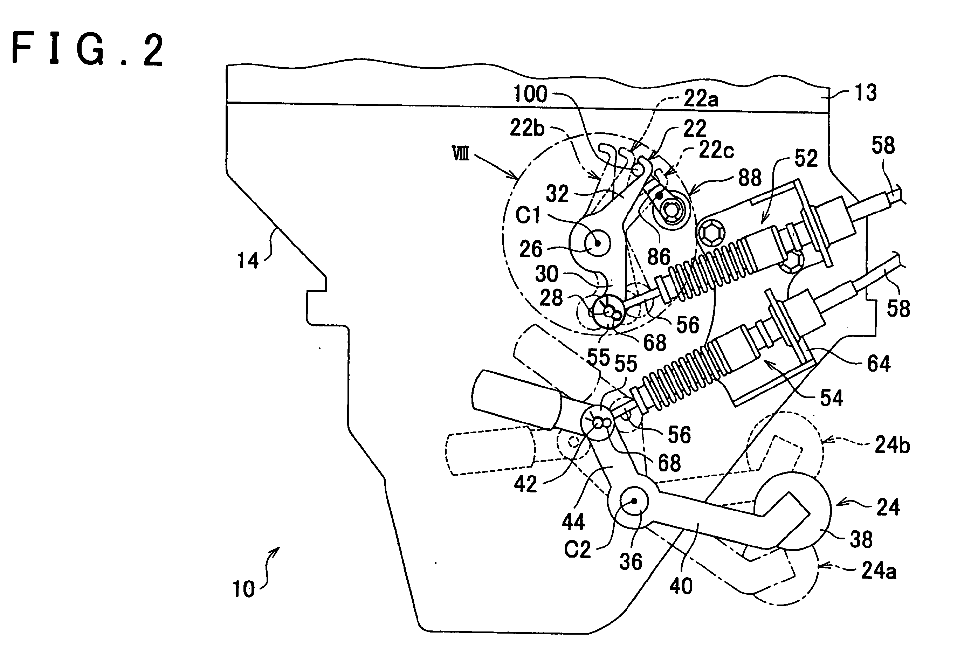

As shown in FIG 1, the manual transmission 10 is provided at an intermediate portion of a power transmission path from an engine 13 (see FIG 2), such as an internal combustion engine, for example, to a pair of right and left driving wheels. The manual transmission 10 performs a speed change operation to transmit an output of the engine 13 to the driving wheels appropriately according to the running state of the vehicle. The manual transmission 10 in accordance with this embodiment is a transversely mounted transmission for use in front-engine front-drive (FF) vehicles, for example. The manual transmission 10 and a well-known differential gear device (not shown) are disposed in a common case 14 together to constitute a transaxle. The manual transmission 10 is a well-known, so-called synchronously engaged parallel shaft transmission that includes a constantly engaged parallel shaft transmission mechanism, which is provided with a plurality of pairs of speed change gears (gear pairs) disposed between a plurality of parallel shafts and constantly engaged with each other at different gear ratios and a plurality of synchronously engaged clutches corresponding to the speed change gear pairs. In the manual transmission 10, the engagement states of the plurality of the synchronously engaged clutches are shifted such that power is transmitted through one of the plurality of speed change gear pairs, allowing establishment of one of the plurality of gears, which include six forward gears and one reverse gear in this embodiment. The transmission mechanism shifts gears including the six forward gears and the one reverse gear.

FIG. 2 is a top view of the manual transmission 10 showing as enlarged a portion indicated by the arrow II in FIG 1. As shown in FIG. 2, the manual transmission 10 includes the transmission mechanism (not shown), a case 14 that houses the transmission mechanism, and a select control lever (control lever) 22 and a shift control lever 24 provided in the case 14 so as to be turnable about axes C1 and C2, respectively. The select control lever 22 and the shift control lever 24 are coupled to a shift lever (manual gear change operation element) 50 to be discussed later via a select cable (cable) 52 and a shift cable 54, respectively, and turnable to one of a plurality of positions according to the operating position of the shift lever 50 to actuate the transmission mechanism.

The select control lever 22 includes a shaft part 26 supported by the case 14 so as to be turnable about the axis C1, a connection arm 30 extending radially from the shaft part 26 and having a connection projection 28, which is parallel to the axis C1, at the extended end that is connected to the select cable 52; and an engagement arm 32 that extends radially from the shaft part 26 and having a hooked end. The shift control lever 24 includes a shaft part 36 to be supported by the case 14 so as to be turnable about the axis C2; an inertial force arm 40 that extends radially from the shaft part 36 and having a weight 38 fixed at the extended end to provide improved shift feel, and a connection arm 44 that extends radially from the shaft part 36 and having a connection projection 42, which is parallel to the axis C2, that projects from an intermediate portion of the extended portion and connects to the shift cable 54.

The select control lever 22 indicated by the solid line in FIG 2 is turned to a first select turning position to select one of the plurality of synchronously engaged clutches that is associated with establishment of a first gear and a second gear. The select control lever 22a indicated by the dotted line in FIG. 2 is turned to a second select turning position to select one of the plurality of synchronously engaged clutches that is associated with establishment of a third gear and a fourth gear. The select control lever 22b indicated by the chain single-dashed line in FIG. 2 is turned to a third select turning position to select one of the plurality of synchronously engaged clutches that is associated with establishment of a fifth gear and a sixth gear. The select control lever 22c indicated by the chain double-dashed line in FIG. 2 is turned to a fourth select turning position to select one of the plurality of synchronously engaged clutches that is associated with establishment of a reverse gear.

The shift control lever 24 indicated by the solid line in FIG 2 is positioned at a neutral turning position at which none of the plurality of synchronously engaged clutches is engaged. The shift control lever 24a indicated by the chain single-dashed line in FIG 2 is turned to a first shift turning position to select one of the plurality of synchronously engaged clutches that is associated with establishment of the first gear, the third gear, the fifth gear, or the reverse gear. The shift control lever 24b indicated by the dotted line in FIG 2 is turned to a second shift turning position to select one of the plurality of synchronously engaged clutches that is associated with establishment of the second gear, the fourth gear, or the sixth gear.

That is, first gear, which has the highest gear ratio, is established when the select control lever 22 is positioned in the first select turning position and the shift control lever 24 is positioned in the first shift turning position. Second gear, which has the second highest gear ratio, is established when the select control lever 22 is positioned at the first select turning position and the shift control lever 24 is positioned in the second position. Third gear, which has the third highest gear ratio, is established when the select control lever 22 is positioned in the second select turning position and the shift control lever 24 is positioned in the first shift turning position. Fourth gear, which has the fourth highest gear ratio, is established when the select control lever 22 is positioned in the second select turning position and the shift control lever 24 is positioned in the second shift turning position. Fifth gear, which has the fifth highest gear ratio, is established when the select control lever 22 is positioned in the third select turning position and the shift control lever 24 is positioned in the first shift turning position. Sixth gear, which has the lowest gear ratio, is established when the select control lever 22 is positioned in the third select turning position and the shift control lever 24 is positioned in the second shift turning position. Reverse gear is established when the select control lever 22 is positioned in the fourth select turning position and the shift control lever 24 is positioned in the first shift turning position.

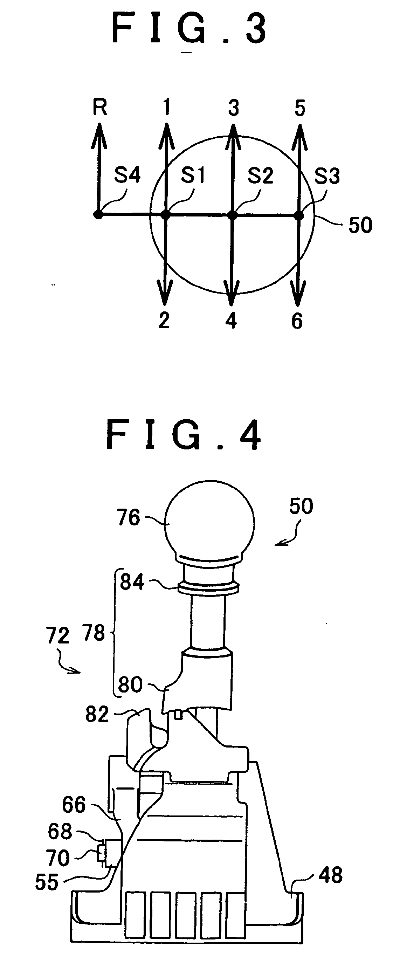

Returning to FIG 1, the manual gear change operation device 12 is operable by the driver to shift the plurality of gears of the manual transmission 10. The manual gear change operation device 12 is a so-called floor shift type, and also a so-called remote control type coupled to the manual transmission 10 via a cable or a link. That is, the manual gear change operation device 12 includes a base 48 provided at a fixed position on the floor 46 beside a driver's seat in the passenger cabin, for example, a shift lever 50 provided on the base 48 so as to be pivotally movable in the fore-and-aft and transverse directions of the vehicle about a support portion provided at a predetermined position in the longitudinal direction and selectively and manually operable to a plurality of operating positions prescribed for gear changes according to predefined operation paths as indicated by a plurality of arrows in FIG 3, which shows the portion indicated by the arrow III in FIG 1, and the select cable 52 that couples the shift lever 50 and the select control lever 22 to turn the select control lever 22 about the axis C1 in conjunction with movement of the shift lever 50 in the transverse direction of the vehicle, namely a select operation, and the shift cable 54 that couples the shift lever 50 and the shift control lever 24 to turn the shift control lever 24 about the axis C2 in conjunction with movement of the shift lever 50 in the fore-and-aft direction of the vehicle, namely a shift operation.

Referring to FIG 3, in the first select position S1, the synchronously engaged clutches associated with establishment of the first gear and the second gear. In the second position S2 the synchronously engaged clutches associated with establishment of the third gear and the fourth gear. In the third position S3, the synchronously engaged clutches associated with establishment of the fifth gear and the sixth gear. In the fourth position S4, the synchronously engaged clutch associated with establishment of the reverse gear. The first select position S1 to the fourth select position S4 are neutral positions at which none of the plurality of synchronously engaged clutches is engaged. In FIG 3, the position indicated by the numeral "1" is an operating position to engage the synchronously engaged clutch associated with establishment of the first gear. The position indicated by the numeral "2" is an operating position to engage the synchronously engaged clutch associated with establishment of the second gear. The position indicated by the numeral "3" is an operating position to engage the synchronously engaged clutch associated with establishment of the third gear. The position indicated by the numeral "4" is an operating position to engage the synchronously engaged clutch associated with establishment of the fourth gear. The position indicated by the numeral "5" is an operating position to engage the synchronously engaged clutch associated with establishment of the fifth gear. The position indicated by the numeral "6" is an operating position to engage the synchronously engaged clutch associated with establishment of the sixth gear. The position indicated by the letter "R" is an operating position to engage the synchronously engaged clutch associated with establishment of the reverse gear. The shift lever 50 is automatically returned to the second select position S2 by the urging force of a spring (not shown) when the shift lever 50 is not operated.

The select cable 52 and the shift cable 54 have the same double structure including an inner cable 56 constituted of a rope-like intermediate member and ring-shaped connection parts 55 (see FIG 2) provided at both ends of the intermediate member and each having a through hole opening in the direction perpendicular to the longitudinal direction of the intermediate member, and a tubular outer cable 58 covering the outer periphery of the inner cable 56 with a predetermined gap. The outer cable 58 is provided at a fixed position on the base 48, a fixation bracket 60 provided at a fixed position on the floor 46, a dash panel 62 located in front of the driver's seat, a fixation bracket 64 provided at a fixed position on the case 14 for the manual transmission 10, and so forth. The inner cable 56 is connected to the select control lever 22 or the shift control lever 24 with one of the ring-shaped connection parts 55 fitted on the connection projection 28 or 42 of the select control lever 22 or the shift control lever 24 and fastened with a pin 68. The inner cable 56 is also connected to the shift lever 50 with the other ring-shaped connection part 55 fitted on a connection projection (not shown) of the shift lever 50 or a connection projection 70 (see FIG 4) provided on a link member 66 (see FIG 1) coupled to the shift lever 50 and fastened with a pin. The inner cable 56 is connected between the select control lever 22 or the shift control lever 24 and the shift lever 50 with a predetermined tension and no slack. In the manual gear change operation device 12 in accordance with this embodiment, the inner cable 56 slides in the outer cable 58 according to a select operation or a shift operation of the shift lever 50 to transmit the operation of the shift lever 50 to the select control lever 22 or the shift control lever 24.

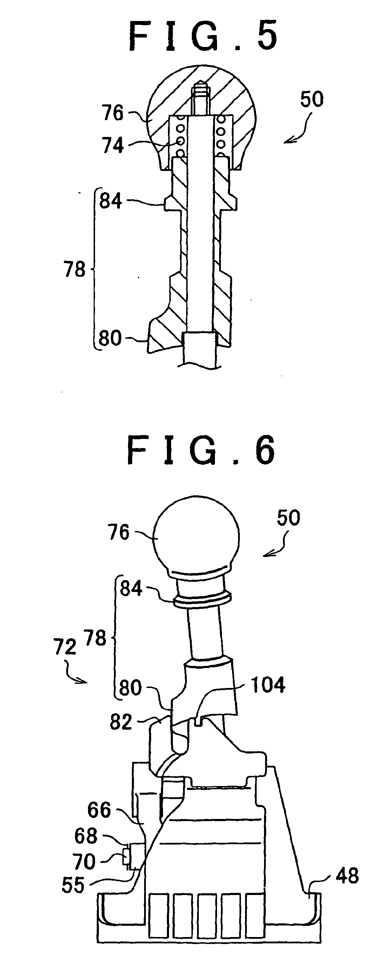

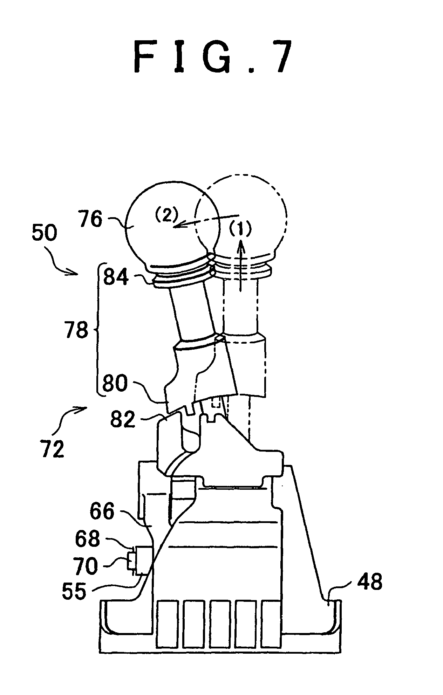

The manual gear change operation device 12 further includes a well-known reverse gear shift restriction mechanism 72 that prevents erroneous shifting from a forward gear to the reverse gear while traveling forward. FIG. 4 is an enlarged view of the manual gear change operation device 12 showing a portion indicated by the arrow IV in FIG 1. FIG 5 is a cross sectional view showing an exemplary cross section of a portion, namely an upper end, of the shift lever 50. In the shift lever 50 in accordance with this embodiment shown in FIGs. 4 and 5, a contact portion 80 provided on a restriction cancellation member 78, which is urged by a compression spring 74 in the direction to move away from a shift operation knob 76, normally contacts a restriction portion 82 provided on the base 48 at the first select position S1 corresponding to the first select turning position, as shown in FIG. 6. That is, a predetermined operation must be performed to move the shift lever 50 to the fourth select position S4 corresponding to the fourth select turning position. The predetermined operation may include bringing the shift lever 50 to a position indicated by the chain double-dashed line in FIG 7, for example by operating a restriction cancellation operation part 84 provided on the restriction cancellation member 78 to move the restriction cancellation member 78 upward, that is, in the direction of moving away from the restriction portion 82 as indicated by the arrow (1) in the drawing, and bringing the shift lever 50 to a position indicated by the solid line in FIG 7 by tilting the shift lever 50 toward the fourth select position S4 as indicated by the arrow (2) in the drawing.

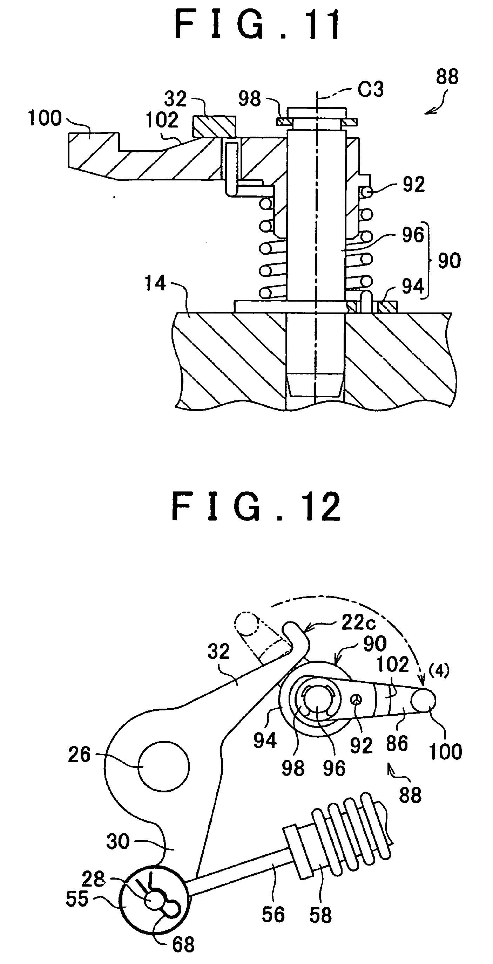

In the manual transmission 10 in accordance with this embodiment, the inner cable 56 of the select cable 52 is connected to the select control lever 22 and the shift lever 50 with a predetermined tension and no slack with the select control lever 22 fixed at the first select turning position (connecting position), which is prescribed from the plurality of positions to which the select control lever 22 is turnable according to the operating position of the shift lever 50, and with the shift lever 50 fixed at the first select position S1. Thus, the manual transmission 10 in accordance with this embodiment includes a retention member 86 retainable on the engagement arm 32 to fix the select control lever 22 at the first select turning position, and a retention release device 88 that causes the retention member 86 to be disengaged from the engagement arm 32 and moved to a retracted position shown in FIG 12 when the select control lever 22 is turned to the fourth select turning position. The retention member 86 and the engagement arm 32 function as a fixation jig that fixes the select control lever 22 at the first select turning position.

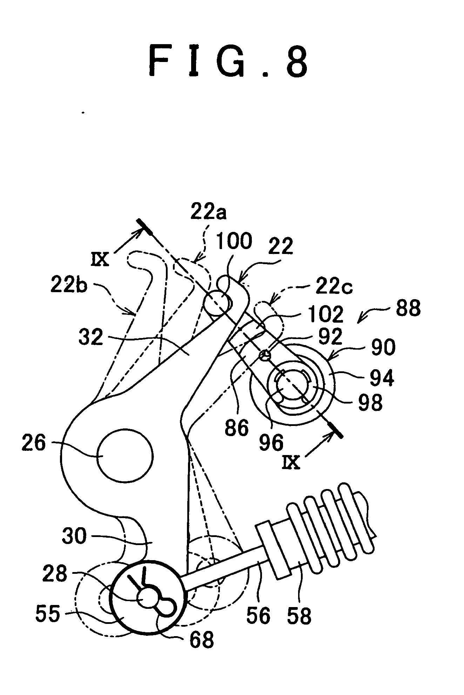

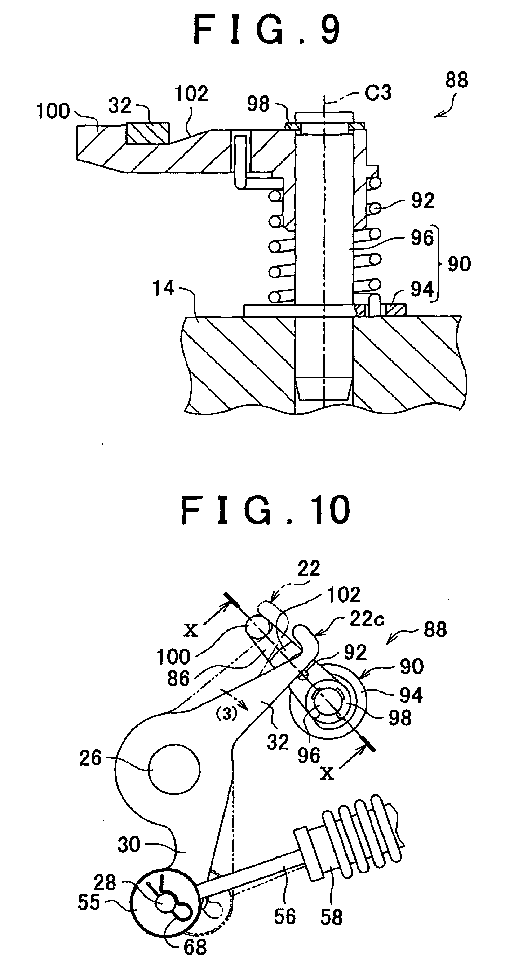

FIG 8 is a top view of and around the retention release device 88 that shows a portion of the manual transmission 10 indicated by the arrow VIII in FIG 2. FIG 9 is a cross sectional view of the retention release device 88 that is taken along the line IX-IX in FIG. 8. FIG 10 is a top view of and around the retention release device 88 that shows a state immediately after the select control lever 22 is turned from the first select turning position indicated by the solid line to the fourth select turning position indicated by the chain double-dashed line in FIG 8. FIG 11 is a cross sectional view of the retention release device 88 that is taken along the line XI-XI in FIG 10. The retention release device 88 includes a support member 90 that supports the retention member 86 for rotation about an axis C3 extending in parallel to the turning axis of the select control lever 22, namely the axis C1, and for movement in the direction of the axis C3, and a torsion spring (urging member) 92 that urges the retention member 86 toward the retracted position. The support member 90 includes a base part 94, provided at a fixed position on the case 14 by press-fitting into the case 14, and a support shaft 96 projected from the base part 94 in the direction of the axis C3 and supporting the retention member 86 for rotation about the axis C3 and movement in the direction of the axis C3. The retention member 86 is prevented from slipping off by an E-ring 98 fixed at an end of the support shaft 96. The torsion spring 92 is wound around the outer periphery of the support shaft 96 with one end retained on the retention member 86 and the other end retained on the base part 94, urging the engagement arm 32 toward the retracted position and in the direction of the axis C3 of the retention member 86 in the opposite direction of the base part 94. The retention member 86 includes an engagement projection 100 projecting in parallel to the axis C3 of the retention member 86 in the same direction as the urging direction of the retention member 86 so as to engage with the hooked end of the engagement arm 32 of the select control lever 22, and an inclined surface 102 that slides relative to the select control lever 22 to move the retention member 86 in the direction of the rotational axis of the engagement arm 32, that is, in the direction of the axis C1 in the direction of press-fitting the support shaft 96 into the case 14, against the urging force of the torsion spring 92 to disengage the engagement projection 100 from the hooked end of the engagement arm 32 during a process of turning the select control lever 22 from the first select turning position shown in FIG. 8 to the fourth select turning position indicated by the solid line in FIG. 10. That is, when the engagement arm 32 is turned from a position indicated by the chain double-dashed line to a position indicated by the solid line while sliding relative to the inclined surface 102 as indicated by the arrow (3) in FIG 10, the engagement projection 100 of the retention member 86 which has been retained on the engagement arm 32 is moved downward to a position at which the retention member 86 is disengaged from the engagement arm 32. When the retention member 86 is moved to this position, that is, to the position shown in FIGs. 10 and 11, it is turned about the axis C3 to the retracted position by the urging force of the torsion spring 92 as indicated by the arrow (4) in FIG. 12.

Hereinafter, a description will be made of the assembly procedure for mounting the manual transmission 10 and the manual gear change operation device 12 on the vehicle, that is, the procedure for connecting the select cable 52 with the shift lever 50 and the select control lever 22 synchronized in operating position on the basis of the first select position S1 and the first select turning position, respectively. First, before the manual transmission 10 is linked with the engine 13, the engagement arm 32 of the select control lever 22 positioned at the first select turning position is retained on the engagement projection 100 of the retention member 86, and the shift control lever 24 is positioned at the neutral turning position. Then, the engine 13 and the manual transmission 10 are linked. Then, one of the ring-shaped connection parts 55 of each of the select cable 52 and the shift cable 54 is fitted on the connection projection 28 or 42 of the select control lever 22 or the shift control lever 24, and retained by the pin 68 so as not to slip off. Then, the engine 13 is mounted on the vehicle together with the manual transmission 10, etc. Then, the shift lever 50 is fixed at the first select position S1 with a fixation pin 104 as shown in FIG 6, and with the manual gear change operation device 12 attached at a predetermined position in the vehicle, the other one of the ring-shaped connection parts 55 of each of the select cable 52 and the shift cable 54 is fitted on the connection projection (not shown) of the shift lever 50 or the connection projection 70 provided on the link member 66 coupled to the shift lever 50, and retained by the pin 68. Then, the fixation pin 104 is detached from the shift lever 50, and thereafter the retention release device 88 unfixes the select control lever 22 by positioning the shift lever 50 at the fourth select position S4 by the predetermined operation.

As discussed above, the manual transmission 10 in accordance with this embodiment includes the engagement arm 32 provided on the select control lever 22, the retention member 86 retainable on the engagement arm 32 to fix the select control lever 22 at the first select turning position, and the retention release device 88 that causes the retention member 86 to be disengaged from the engagement arm 32 and moved to the retracted position when the select control lever 22 is turned to the fourth select turning position which is different from the first select turning position, of the plurality of positions. Consequently, the retention member 86 fixing the select control lever 22 can be disengaged from the engagement arm 32 provided on the select control lever 22 by operating the shift lever 50. Therefore, the select control lever 22 can be unfixed without directly operating the fixation jig that fixes the select control lever 22, that is, the engagement arm 32 and the retention member 86. Accordingly, it is not necessary to secure a handling space for an assembly worker in which unfixing work can be performed in a relatively small engine room (engine compartment), increasing the degree of freedom in arrangement of parts in the engine room and making the engine room compact compared to a case where a handling space is secured.

According to the manual transmission 10, the retention release device 88 includes the support member 90 that supports the retention member 86 for rotation about the axis C3 extending in parallel to the turning axis of the select control lever 22, namely the axis C1, and for movement in the direction of the axis C3, and the torsion spring 92 that urges the retention member 86 toward the retracted position. Consequently, the retention member 86 may be disengaged from the engagement arm 32 provided on the select control lever 22 by operating The shift lever 50 coupled to the select control lever 22 via the select cable 52. Therefore, the select control lever 22 can be unfixed without directly operating the fixation jig that fixes the select control lever 22, that is, the engagement arm 32 and the retention member 86. After the unfixing, the retention member 86 can be moved to the retracted position by the torsion spring 92 so that the retention release device 88 including the retention member 86 advantageously does not obstruct subsequent operation of the select control lever 22.

According to the manual transmission 10 in accordance with this embodiment, the support member 90 includes the base part 94 provided at a fixed position on the case 14 by press-fitting into the case 14, and the support shaft 96 projected from the base part 94 in the direction of the axis C3 and supporting the retention member 86 for rotation about the axis C3 and movement in the direction of the axis C3, and the torsion spring 92 is wound around the outer periphery of the support shaft 96 with one end retained on the retention member 86 and the other end retained on the base part 94.

The retention member 86 includes the engagement projection 100 projecting in parallel to the axis C3 of the retention member 86 so as to engage with the hooked end of the engagement arm 32 of the select control lever 22, and the inclined surface 102 that slides relative to the select control lever 22 to move the retention member 86 in the direction of the rotational axis of the engagement arm 32, that is, in the direction of the axis C1 against the urging force of the torsion spring 92 to disengage the engagement projection 100 from the hooked end of the engagement arm 32 during a process of turning the select control lever 22 from the first select turning position to the fourth select turning position. Consequently, the engagement projection 100 of the retention member 86 fixing the select control lever 22 can be disengaged from the engagement arm 32 provided on the select control lever 22 by operating the shift lever 50. Therefore, the select control lever 22 can be unfixed without directly operating the fixation jig that fixes the select control lever 22, that is, the engagement arm 32 and the engagement projection 100.

An embodiment of the present invention has been described in detail above with reference to the drawings. It should be noted, however, that the present invention is not limited to the embodiment and may be implemented in other embodiments.

For example, although the select control lever 22 is fixed at the first select turning position before connection of the other end of the select cable 52 in the above embodiment, the present invention is not limited thereto. Rather, the select control lever 22 may be fixed at any one of the second to fourth select turning positions, for example. Accordingly, the retention release device 88 may include the retention member 86 retainable on the engagement arm 32 to fix the select control lever 22 at a connecting position or any one of the first to fourth select turning positions, and may cause the retention member 86 to be disengaged from the engagement arm 32 and moved to the retracted position when the select control lever 22 is turned to a position different from the connecting position.

Although the manual transmission 10 includes the reverse gear shift restriction mechanism 72 and the shift lever 50 and the select control lever 22 are synchronized in operating position on the basis of the connecting position in order to allow the reverse gear shift restriction mechanism 72 to function normally in the above embodiment, the present invention is not limited thereto. Rather, the synchronization may be achieved in order to allow a mechanism different from the reverse gear shift restriction mechanism 72 to function normally. For example, the manual transmission 10 may include a mechanism that restricts shifting from a predetermined gear to another predetermined gear, for example, shifting from a higher gear such as the fifth gear or the sixth gear while running at that gear to a lower gear such as the first gear or the second gear, and the shift lever 50 and the select control lever 22 may be synchronized in operating position on the basis of the connecting position in order to allow that mechanism to function normally.

Although the manual transmission 10 constitutes a transaxle, and is transversely mounted and provided on an axle for driving wheels on the front side of the vehicle, that is, the front wheel axle, in the above embodiment, the present invention is not limited thereto. For example, the manual transmission 10 may be longitudinally mounted or provided on the rear wheel axle or at a different position. In short, the present invention may be applied to any transmission of a so-called remote control type in which the select control lever 22 and the shift control lever 24 are operated via a cable or a link to actuate the transmission mechanism that shifts a plurality of gears.

Although the vehicle to which an embodiment of the present invention is applied is an FF vehicle having the transversely mounted manual transmission 10 and including the engine 13 as a running power source in the above embodiment, the present invention is not limited thereto. For example, the present invention may be applied to front-engine rear-drive (FR) vehicles or vehicles of other drive types. The present invention may also be applied to hybrid vehicles equipped with a Toyota Hybrid System (THS), for example, in which an electric motor or the like as well as the engine 13 constituted of an internal combustion engine such as a gasoline engine or a diesel engine is used to drive the driving wheels, and so forth.

It should be noted that the embodiment discussed above is merely illustrative, and the present invention may be implemented in variously modified or improved forms based on the knowledge of those skilled in the art without departing from the scope of the invention, which is defined by the appended claims.

## Claims

1. A manual transmission (10) for a vehicle, including a transmission mechanism that shifts a plurality of gears, a case (14) that houses the transmission mechanism, a manual gear change operation element (50) to which a manual gear change operation is input, and a control lever (22) that is provided in the case (14) so as to be turnable about an axis and coupled to the manual gear change operation element (50) via a cable (52), the control lever (22) being turned to one of a plurality of positions according to an operating position of the manual gear change operation element (50) to actuate the transmission mechanism, and the cable (52) being connected to the manual gear change operation element (50) with the control lever (22) fixed at a prescribed connecting position, of the plurality of positions, the manual transmission further comprises:
an engagement arm (32) that is provided on the control lever (22);
a retention member (86) that engages with the engagement arm to fix the control lever (22) at the prescribed connecting position; wherein the retention member (86) is rotatable about an axis (C3) that extends in a direction parallel to a turning axis (C1) of the control lever (22) and is movable in a direction of the axis and
a retention release device (88) that disengages the retention member (86) from the engagement arm and moves to a retracted position when the control lever (22) is turned to a position of the plurality of positions other than the connecting position; wherein the retention release device (88) includes a support member (90) that supports the retention member (86) and an urging member (92) that urges the retention member (86) toward the retracted position.

2. The manual transmission according to claim 1, wherein
the support member includes a support shaft (96) that projects from the case (14) in a direction parallel to the turning axis (C1) of the control lever (22) and supports the retention member (86), and
the urging member (92) is a coil spring that is wound around an outer periphery of the support shaft (96) with one end retained on the retention member (86) and the other end retained on the base part (94) or the case (14) to urge the retention member (86) toward the retracted position and in a direction of a rotational axis (C3) of the retention member.

3. The manual transmission according to claim 2, wherein the retention member (86) includes an engagement projection (100) that projects in a direction parallel to the rotational axis (C3) of the retention member (86) wherein the engagement projection (100) engages with an end of the control lever (22), and an inclined surface (102) is formed on the retention member (86) and slides relative to the control lever (22) to move the retention member (86) against an urging force of the coil spring (92) to disengage the engagement projection (100) from the end of the control lever (22) when the control lever (22) is turned to a position other than the connecting position.

4. The manual transmission according to claim 2, wherein the retention member (86) includes an engagement projection (100) that projects in a direction parallel to the rotational axis (C3) of the retention member (86) and in a direction that the retention member (86) is urged, wherein the engagement projection (100) engages with an end of the control lever (22), and an inclined surface (102) is formed on the same side of the retention member (86) as the engagement projection (100).

5. The manual transmission according to claim 4, wherein
the retention member (86) includes the engagement projection (100) at one end and a support portion that is rotatably supported by the support member (90) at the other end, and
the inclined surface (102) is formed between the engagement projection (100) and the support portion.

## Patentansprüche

1. Handschaltgetriebe (10) für ein Fahrzeug, das einen Getriebemechanismus, der eine Mehrzahl von Gängen schaltet, ein Gehäuse (14), in dem der Getriebemechanismus untergebracht ist, ein manuelles Gangschaltbetätigungselement (50), in das ein manueller Gangschaltbetätigungsvorgang eingegeben wird, und einen Steuerhebel (22) beinhaltet, der in dem Gehäuse (14) so angeordnet ist, dass er um eine Achse drehbar ist und mit dem manuellen Gangschaltbetätigungselement (50) über ein Kabel (52) gekoppelt ist, wobei der Steuerhebel (22) in eine von einer Mehrzahl von Positionen gemäß einer Betätigungsposition des manuellen Gangschaltbetätigungselements (50) gedreht wird, so dass der Getriebemechanismus betätigt wird, und das Kabel (52) mit dem manuellen Gangschaltbetätigungselement (50) verbunden ist, wobei der Steuerhebel (22), von der Mehrzahl der Positionen, an einer vorgeschriebenen Verbindungsposition befestigt wird, wobei das Handschaltgetriebe ferner aufweist:
einen Eingreifarm (32), der auf dem Steuerhebel (22) angeordnet ist;
ein Sicherungselement (86), das mit dem Eingreifarm in Eingriff gelangt, so dass der Steuerhebel (22) an der vorgeschriebenen Verbindungsposition befestigt wird; wobei das Sicherungselement (86) um eine Achse (C3) drehbar ist, die sich in einer Richtung parallel zu einer drehenden Achse (C1) des Steuerhebels (22) erstreckt und in einer Richtung der Achse beweglich ist, und
eine Sicherungsfreigabevorrichtung (88), das das Sicherungselement (86) aus dem Eingreifarm löst und in eine eingefahrene Position bewegt, wenn der Steuerhebel (22) von der Mehrzahl der Positionen in eine andere Position als die Verbindungsposition gedreht wird; wobei die Sicherungsfreigabevorrichtung (88) ein Trägerelement (90) beinhaltet, dass das Sicherungselement (86) und ein Drängelement (92) hält, das das Sicherungselement (86) in Richtung der eingefahrenen Position drängt.

2. Handschaltgetriebe nach Anspruch 1, wobei
das Trägerelement eine Trägerwelle (96) beinhaltet, die aus dem Gehäuse (14) in eine Richtung parallel zu der sich drehenden Achse (C1) des Steuerhebels (22) hervorsteht und das Sicherungselement (86) hält, und
das Drängelement (92) eine Schraubenfeder ist, die um einen äußeren Umfang der Trägerwelle (96) gewickelt ist, wobei ein Ende auf dem Sicherungselement (86) gesichert ist und das andere Ende auf dem Basisteil (94) oder dem Gehäuse (14) gesichert ist, so dass das Sicherungselement (86) in Richtung der eingefahrenen Position und in Richtung einer Drehachse (C3) des Sicherungselements gedrängt wird.

3. Handschaltgetriebe nach Anspruch 2, wobei das Sicherungselement (86) einen Eingreifvorsprung (100) beinhaltet, der in einer Richtung parallel zu der Drehachse (C3) des Sicherungselements (86) hervorsteht, wobei der Eingreifvorsprung (100) mit einem Ende des Steuerhebels (22) in Eingriff gelangt, und eine geneigte Oberfläche (102) auf dem Sicherungselement (86) ausgebildet ist und relativ zu dem Steuerhebel (22) gleitet, so dass das Sicherungselement (86) gegen eine Drängkraft der Schraubenfeder (92) bewegt wird, so dass der Eingreifvorsprung (100) von dem Ende des Steuerhebels (22) gelöst wird, wenn der Steuerhebel (22) in eine andere Position als die Verbindungsposition gedreht wird.

4. Handschaltgetriebe nach Anspruch 2, wobei das Sicherungselement (86) einen Eingreifvorsprung (100) beinhaltet, der in einer Richtung parallel zu der Drehachse (C3) des Sicherungselements (86) und in einer Richtung vorsteht, in die das Sicherungselement (86) gedrängt wird, wobei der Eingreifvorsprung (100) mit einem Ende des Steuerhebels (22) in Eingriff gelangt, und eine geneigte Oberfläche (102) auf der gleichen Seite des Sicherungselements (86) ausgebildet ist wie der Eingreifvorsprung (100).

5. Handschaltgetriebe nach Anspruch 4, wobei
das Sicherungselement (86) den Eingreifvorsprung (100) an einem Ende und einen Trägerabschnitt, der durch das Trägerelement (90) drehbar getragen wird, an dem anderen Ende beinhaltet, und
die geneigte Oberfläche (102) zwischen dem Eingreifvorsprung (100) und dem Trägerbereich ausgebildet ist.

## Revendications

1. Transmission manuelle (10) pour un véhicule, incluant un mécanisme de transmission qui change entre une pluralité de vitesses, un carter (14) qui loge le mécanisme de transmission, un élément d'actionnement de changement de vitesse manuel (50) sur lequel un actionnement de changement de vitesse manuel est entré, et un levier de commande (22) qui est placé dans le carter (14) de façon à pouvoir tourner autour d'un axe et est couplé à l'élément d'actionnement de changement de vitesse manuel (50) via un câble (52), le levier de commande (22) étant tourné vers l'une d'une pluralité de positions selon une position d'actionnement de l'élément d'actionnement de changement de vitesse manuel (50) pour actionner le mécanisme de transmission, et le câble (52) étant connecté à l'élément d'actionnement de changement de vitesse manuel (50) avec le levier de commande (22) fixé en une position de connexion prescrite, de la pluralité de positions, la transmission manuelle comprend en outre
un bras de venue en prise (32) qui est placé sur le levier de commande (22) ;
un élément de retenue (86) qui vient en prise avec le bras de venue en prise pour fixer le levier de commande (22) dans la position de connexion prescrite ; dans laquelle l'élément de retenue (86) peut tourner autour d'un axe (c3) qui s'étend dans une direction parallèle à un axe tournant (c1) du levier de commande (22) et est mobile dans une direction de l'axe et
un dispositif de libération de retenue (88) qui fait venir hors de prise l'élément de retenue (86) du bras de venue en prise et se déplace dans une position rétractée quand le levier de commande (22) est tourné dans une position de la pluralité de positions autre que la position de connexion ; dans laquelle le dispositif de libération de retenue (88) inclut un élément de support (90) qui supporte l'élément de retenue (86) et un élément de poussée (92) qui pousse l'élément de retenue (86) vers la position rétractée.

2. Transmission manuelle selon la revendication 1, dans laquelle
l'élément de support inclut un arbre de support (96) qui fait saillie depuis le carter (14) dans une direction parallèle à l'axe tournant (21) du levier de commande (22) et supporte l'élément de retenue (86), et
l'élément de poussée (92) est un ressort hélicoïdal qui est enroulé autour d'une périphérie extérieure de l'arbre de support (96) avec une extrémité retenue sur l'élément de retenue (86) et l'autre extrémité retenue sur la partie de base (94) ou le carter (14) pour pousser l'élément de retenue (86) vers la position rétractée et dans une direction d'un axe de rotation (c3) de l'élément de retenue.

3. Transmission manuelle selon la revendication 2, dans laquelle l'élément de retenue (86) inclut une saillie de prise (100) qui fait saillie dans une direction parallèle à l'axe de rotation (c3) de l'élément de retenue (86) dans laquelle la saillie de prise (100) vient en prise avec une extrémité du levier de commande (22), et une surface inclinée (102) est formée sur l'élément de retenue (86) et coulisse par rapport au levier de commande (22) pour déplacer l'élément de retenue (86) contre une force de poussée du ressort hélicoïdal (92) pour faire venir la saillie de prise (100) hors de prise de l'extrémité du levier de commande (22) quand le levier de commande (22) est tourné dans une position autre que la position de connexion.

4. Transmission manuelle selon la revendication 2, dans laquelle l'élément de retenue (86) inclut une saillie de prise (100) qui fait saillie dans une direction parallèle à l'axe de rotation (c3) de l'élément de retenue (86) et dans une direction où l'élément de retenue (86) est poussé, dans laquelle la saillie de prise (100) vient en prise avec une extrémité du levier de commande (22), et une surface inclinée (102) est formée sur le même côté de l'élément de retenue (86) que la saillie de prise (100).

5. Transmission manuelle selon la revendication 4, dans laquelle
l'élément de retenue (86) inclut la saillie de prise (100) à une extrémité et une partie de support qui est supportée à rotation par l'élément de support (90) à l'autre extrémité, et
la surface inclinée (102) est formée entre la saillie de prise (100) et la partie de support.
